**Europäisches Patentamt**

(19) **European Patent Office**

**Office européen des brevets**

(11) Numéro de publication: **0 161 147**
**B1**

(12) **FASCICULE DE BREVET EUROPEEN**

(45) Date de publication du fascicule du brevet:
**03.08.88**

(51) Int. Cl.⁴: **F 16 F 9/36, F 15 B 15/14**

(21) Numéro de dépôt: **85400630.1**

(22) Date de dépôt: **29.03.85**

(54) Vérin amortisseur pour suspension oléopneumatique de véhicule.

(30) Priorité: **19.04.84 FR 8406244**

(43) Date de publication de la demande:
**13.11.85 Bulletin 85/46**

(45) Mention de la délivrance du brevet:
**03.08.88 Bulletin 88/31**

(84) Etats contractants désignés:
**DE GB IT**

(56) Documents cités:
**DE - B - 1 214 055**
**FR - A - 1 113 437**
**FR - A - 1 491 446**
**FR - A - 2 009 717**
**FR - A - 2 530 549**
**US - A - 2 946 316**

(73) Titulaire: **AUTOMOBILES PEUGEOT, 75, avenue de la Grande Armée, F-75116 Paris (FR)**
Titulaire: **AUTOMOBILES CITROEN, 62 Boulevard Victor-Hugo, F-92200 Neuilly-sur-Seine (FR)**

(72) Inventeur: **Richard, Denis, 65 rue Mirabeau, F-94600 Choisy-le-Roi (FR)**

(74) Mandataire: **Durand, Yves Armand Louis et al, Cabinet Z. Weinstein 20, Avenue de Friedland, F-75008 Paris (FR)**

ACTORUM AG

## Description

La présente invention a essentiellement pour objet un vérin amortisseur pour une suspension oléopneumatique de véhicule automobile par exemple.

On connaît déjà d'après le document FR-A-1 491 446 par exemple, des suspensions comprenant au moins un vérin amortisseur interposé entre la structure du véhicule et un bras support de roue afin d'établir entre cette structure et ce bras une liaison élastique amortie.

Un tel vérin comporte généralement un cylindre articulé à la structure du véhicule et dans lequel coulisse un piston dont la tige est articulée au bras support de roue. Le piston délimite dans le cylindre une chambre ou un compartiment haute pression du côté opposé à la tige de piston, et ladite chambre haute pression peut être reliée hydrauliquement par l'intermédiaire d'un amortisseur à un accumulateur oléopneumatique fixé à la structure du véhicule.

Dans ce type de vérin, la tige du piston comporte une partie qui est extérieure au cylindre et est en général protégée contre la poussière et autres corps étrangers par un soufflet en matériau élastomère entourant ladite partie de tige extérieure au cylindre.

Or, il se produit fréquemment un suintement de l'huile, issue de la chambre haute pression entre le piston et le cylindre. En d'autres termes, il se produit une fuite d'huile qui est perdue et qui de plus s'écoule le long de la tige du piston et s'accumule dans les plis du soufflet pare-poussière pour finalement provoquer son perçage.

Par ailleurs, on connaît d'après le document US-A-2 946 316 un vérin hydraulique dont le piston comporte un perçage communiquant d'une part avec l'interface piston-cylindre et d'autre part avec un alésage axial ménagé dans la tige du piston et communiquant avec l'atmosphère. Ainsi le liquide hydraulique suintant entre le piston et le cylindre est rejeté vers l'extérieur et donc perdu.

La présente invention a pour but de remédier à ces inconvénients en proposant un vérin amortisseur perfectionné dans lequel l'huile de fuite précitée est avantageusement récupérée pour graisser l'une des articulations de la suspension d'un véhicule.

A cet effet, l'invention a pour objet un vérin amortisseur pour suspension oléopneumatique d'un véhicule automobile par exemple et du type comprenant un cylindre articulé à la structure du véhicule et dans lequel coulisse un piston dont la tige est articulée à un bras supportant une roue, lequel piston délimite dans le cylindre, du côté opposé à sa tige, une chambre haute pression contenant de l'huile sous pression et reliée à un accumulateur oléopneumatique par l'intermédiaire d'un amortisseur, caractérisé en ce qu'il comporte un circuit de récupération de l'huile issue de la chambre haute pression et suintant entre le piston et le cylindre, ce circuit comprenant une gorge annulaire ménagée dans le piston et communiquant par l'intermédiaire d'un perçage ménagé dans ledit piston avec un alésage axial ménagé dans la tige du piston et communiquant avec une rotule assurant l'articulation de la tige du piston au bras supportant la roue.

Suivant une autre caractéristique de ce vérin, la tige du piston est solidaire de la cage de la rotule précitée, ladite cage comportant un perçage communiquant d'une part avec l'alésage axial de la tige de piston et d'autre part avec un espace compris entre cette cage et un capuchon qui la recouvre.

Selon une autre caractéristique de l'invention, l'espace précité est relié à un réservoir de l'huile récupérée par l'intermédiaire d'une conduite solidaire du capuchon précité.

L'invention vise également un véhicule automobile équipé d'au moins un vérin amortisseur répondant aux caractéristiques susmentionnées.

Mais d'autres avantages et caractéristiques de l'invention apparaîtront mieux dans la description détaillée qui suit et se réfère aux dessins annexés, donnés uniquement à titre d'exemple, et dans lesquels:

La figure 1 est une vue en coupe axiale d'un vérin amortisseur conforme aux principes de l'invention.

La figure 2 est une vue en coupe, suivant la ligne II–II de la figure 1, de l'articulation reliant la tige du vérin au bras de roue, et

La figure 3 est une vue en coupe, suivant sensiblement la ligne III–III de la figure 1, de l'articulation reliant le cylindre du vérin à la structure du véhicule.

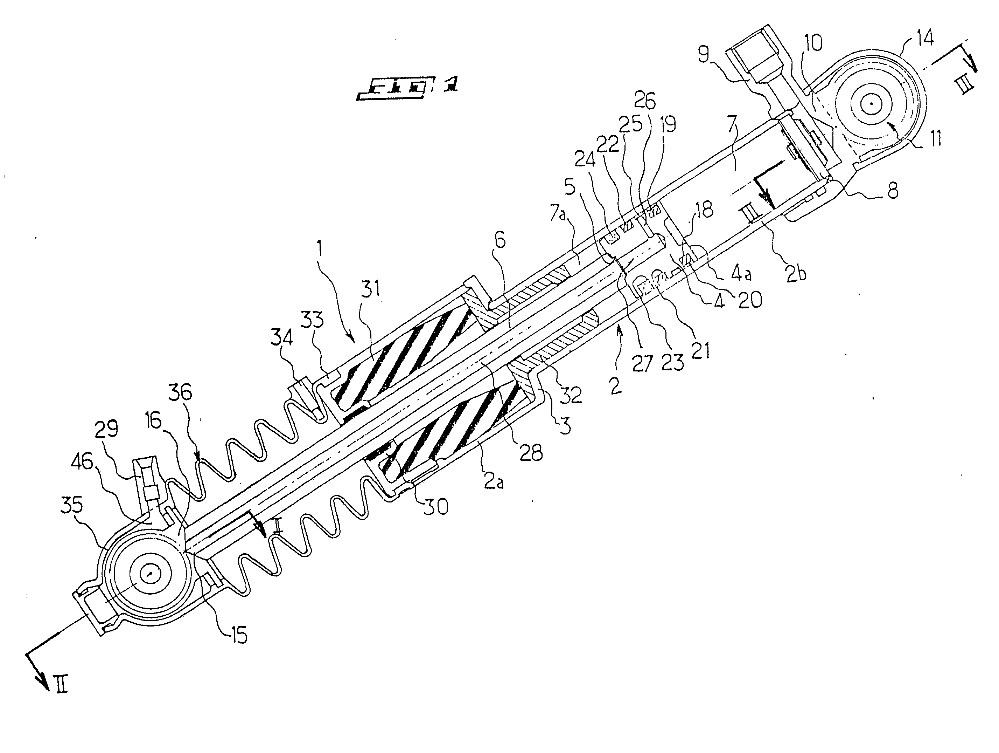

Suivant un exemple de réalisation, et en se reportant plus particulièrement à la figure 1, un vérin amortisseur 1 conforme à l'invention comprend essentiellement un cylindre 2 formé d'une partie élargie 2a raccordée par l'intermédiaire d'un épaulement 3 à une partie 2b de diamètre réduit, et dans laquelle coulisse un piston 4 auquel est fixée en 5 une tige 6.

Le piston 4 délimite du côté de sa face active 4a, c'est-à-dire du côté opposé à la tige 6, une chambre haute pression 7 contenant de préférence de l'huile sous pression. Cette chambre 7 est en liaison avec un accumulateur oléopneumatique non représenté par l'intermédiaire d'un amortisseur 8 et d'un raccord haute pression 9.

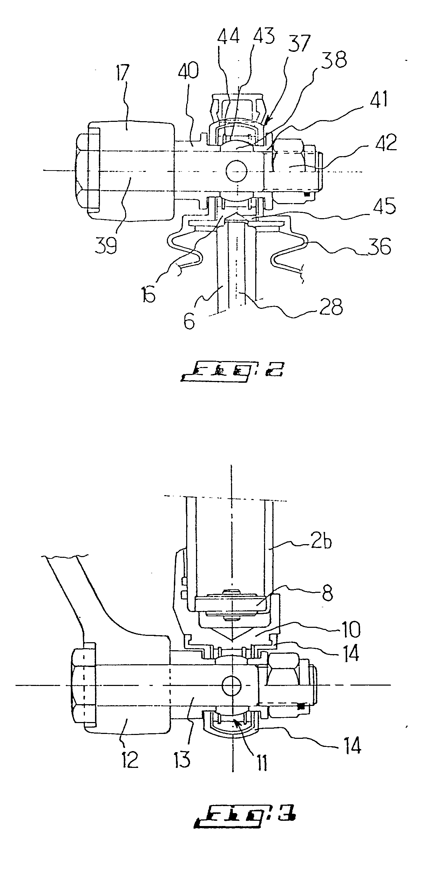

Ce raccord 9 est solidaire d'une cage de rotule 10 fixée de manière étanche à l'extrémité de la partie 2b du cylindre 2. Comme on le voit mieux sur la figure 3, la cage de rotule 10 contient une rotule 11 articulée à la structure 12 d'un véhicule par l'intermédiaire d'un boulon 13. La rotule 11 est protégée par un capuchon ou analogue 14 en matériau élastomère, ledit capuchon étant fixé d'une manière appropriée à la cage 10 de rotule 11. Bien entendu, le raccord 9 est relié à l'accumulateur oléopneumatique par un flexible haute pression non représenté, de façon à permettre le fonctionnement de la rotule 11.

La tige 6 du piston 4 est elle aussi fixée, par exemple soudée, comme on l'a montré en 15, à une autre cage de rotule 16 assurant l'articulation

de ladite tige 6 à un bras 17 support de roue, comme on le voit sur la figure 2, et comme cela sera décrit en détail plus loin.

Revenant à la figure 1, on voit que le piston 4 comporte, du côté de sa face active, une gorge 18 qui contient à fond de gorge un joint haute pression constitué d'une part d'un joint torique 19 et d'autre part d'un anneau en «Téflon» 20 coulissant sur la périphérie interne de la partie 2b du cylindre 2. Comme on l'a expliqué précédemment, ce joint haute pression ne permet pas d'éviter le suintement de l'huile depuis la chambre 7 vers l'espace 7a du cylindre 2 du côté opposé à la face active 4a du piston 4. Ce suintement peut être arrêté par une deuxième gorge 21 contenant un joint torique basse pression 22, tandis qu'une troisième gorge 23 contenant un feutre 24 sert à graisser le joint basse pression 22 pendant la détente du vérin.

Suivant une caractéristique essentielle de l'invention, une gorge annulaire 25 est prévue entre les gorges 18 et 21 pour récupérer l'huile de suintement. Cette gorge 25 communique par l'intermédiaire d'un perçage radial 26 ménagé dans le piston 4, avec un perçage axial borgne 27 également prévu dans ledit piston. Ce perçage axial borgne 27 est situé dans le prolongement d'un alésage axial 28 ménagé dans la tige 6 du piston et permettant d'amener l'huile récupérée à la cage de rotule 16, ce après quoi l'huile peut être évacuée dans un réservoir basse pression non représenté, par l'intermédiaire d'un conduit, raccord ou analogue 29, qui sera décrit en détail plus loin.

On a montré en 30 sur la figure 1 un palier solidaire de la partie élargie 2a du cylindre 2 et qui permet de guider la tige 6 du piston 4. La partie élargie 2a contient une butée 31 en élastomère dont la compression limite la course de détente du vérin, tandis qu'une entretoise 32, dans laquelle coulisse la tige 6 du piston, transmet à la butée 3 l'effort du piston 4. On notera ici que le mouvement du vérin, dans le sens de la compression est limité par une butée non représentée et portée par la structure du véhicule.

On a montré en 36 un soufflet en matériau élastomère comportant un certain nombre de plis et protégeant contre la poussière la partie de la tige 6 du piston extérieure au cylindre 2. Ce soufflet est fixé en 33 à la partie élargie 2a du cylindre 2, et il comporte une prise d'air 34 permettant son aération lors de la détente, ainsi que l'évacuation de l'air pendant la compression. A son extrémité opposée, le soufflet 36 forme un capuchon 35 qui entoure la cage de rotule 16 assurant l'articulation de la tige 6 du piston 4 au bras de roue 17.

La cage 16, comme on le voit mieux sur la figure 2, contient une rotule 37 formée d'une noix de rotule 38 solidaire d'un boulon 39 fixé au bras de roue 17. Des entretoises montrées en 40 et 41 permettent la fixation de la noix de rotule 38 au bras de roue 17 grâce au serrage effectué sur l'écrou 42.

La rotule 37 comporte en outre une pièce externe 43 fixée au moyen de clips 44 à la cage de rotule 16. Cette pièce externe 43 dispose, comme l'ensemble du vérin, d'une liberté de mouvement angulaire limitée, par rapport à un axe perpendiculaire au plan défini par l'axe du vérin et l'axe du boulon 39, ainsi que d'une certaine liberté de rotation autour dudit boulon.

Conformément à l'invention, la cage de rotule 16 comporte un perçage radial 45 communiquant d'une part avec l'alésage axial 28 de la tige 6 du piston (figure 2), et d'autre part avec un espace 46 (figure 1) compris entre la cage 16 et le capuchon 35 qui la recouvre.

Comme on le voit bien sur la figure 1, le raccord 29 permettant l'évacuation de l'huile récupérée vers un réservoir non représenté, est solidaire du capuchon 35.

Ainsi, l'huile de suintement récupérée dans l'alésage 28 de la tige 6 du piston, passe par le perçage 45 et remplit tout l'espace compris entre la cage de rotule 16 et le capuchon 35 de manière à graisser la rotule 37, puis l'huile est évacuée par le raccord 29.

On notera ici que la rotule 11 assurant l'articulation du vérin selon l'invention à la structure du véhicule n'a pas besoin d'un graissage permanent, puisqu'elle travaille moins que la rotule 37 permettant l'articulation du vérin sur le bras de roue 17.

Bien entendu, l'invention n'est nullement limitée au mode de réalisation de circuit d'huile de récupération, tel qu'il a été décrit et illustré.

**Revendications**

1. Vérin amortisseur pour suspension, oléopneumatique d'un véhicule automobile par exemple et du type comprenant un cylindre (2) articulé à la structure du véhicule et dans lequel coulisse un piston (4) dont la tige (6) est articulée à un bras (17) supportant une roue, lequel piston délimite dans le cylindre (2), du côté opposé à sa tige (6) une chambre haute pression (7) contenant de l'huile sous pression et reliée à un accumulateur oléopneumatique par l'intermédiaire d'un amortisseur (8), caractérisé en ce qu'il comporte un circuit de récupération de l'huile issue de la chambre haute pression (7) et suintant entre le piston et le cylindre, ce circuit comprenant une gorge annulaire (25) ménagée dans le piston (4) et communiquant par l'intermédiaire d'un perçage (26, 27) ménagé dans ledit piston avec un alésage axial (28) ménagé dans la tige (6) du piston (4) et communiquant avec une rotule (37) assurant l'articulation de la tige (6) du piston (4) au bras (17) supportant la roue.

2. Vérin selon la revendication 1, caractérisé en ce que la tige (6) du piston (4) est solidaire de la cage (16) de la rotule précitée (37), ladite cage comportant un perçage (45) communiquant d'une part avec l'alésage axial (28) de la tige (6) du piston et d'autre part avec un espace (46) compris entre cette cage et un capuchon (35) qui la recouvre.

3. Vérin selon la revendication 2, caractérisé en ce que l'espace précité (46) est relié à un réservoir d'huile récupérée, par l'intermédiaire d'une conduite (29) solidaire du capuchon précité (35).

4. Véhicule équipé de vérins amortisseurs selon l'une quelconque des revendications précédentes.

## Patentansprüche

1. Stossdämpferzylinder für die pneumatisch-ölhydraulische Aufhängung eines Kraftfahrzeugs zum Beispiel, und der Gattung, die einen mit der Struktur des Kraftfahrzeugs gelenkig verbundenen Zylinder (2) aufweist, in dem ein Kolben (4) gleitet, dessen Stange (6) mit einem ein Rad tragenden Arm (17) gelenkig verbunden ist, wobei der besagte Kolben im Zylinder (2) auf der der Kolbenstange (6) gegenüberliegenden Seite eine Drucköl enthaltende Hochdruckkammer (7) begrenzt, die, durch einen Dämpfer (8), mit einem pneumatisch-ölhydraulischen Speicher verbunden ist, dadurch gekennzeichnet, dass er einen Kreis zur Rückgewinnung des aus der Hochdruckkammer (7) kommenden und zwischen dem Kolben und dem Zylinder absickernden Öls aufweist, wobei dieser Kreis eine im Kolben (4) gebildete Ringnut (25) aufweist, die durch eine im besagten Kolben gebildete Bohrung (26, 27) mit einer, in der Stange (6) des Kolbens (4) gebildeten, axialen Bohrung (28) verbunden ist, welche mit einem Kugelgelenk (37) in Verbindung steht, durch das die Stange (6) des Kolbens (4) mit dem das Rad tragenden Arm (17) gelenkig verbunden ist.

2. Zylinder nach Anspruch 1, dadurch gekennzeichnet, dass die Stange (6) des Kolbens (4) mit dem Gehäuse (16) des besagten Kugelgelenks (37) fest verbunden ist, wobei das besagte Gehäuse eine Bohrung (45) aufweist, die einerseits mit der axialen Bohrung (28) der Kolbenstange (6) und andererseits mit einem zwischen diesem Gehäuse und einer das Gehäuse bedeckenden Haube (35) liegenden Raum (46) verbunden ist.

3. Zylinder nach Anspruch 2, dadurch gekennzeichnet, dass der besagte Raum (46) mit einem Rückgewinnungsölspeicher durch eine mit der besagten Haube (35) fest verbundene Leitung (29) verbunden ist.

4. Mit Stossdämpferzylindern gemäss einem der vorangehenden Ansprüche versehenes Kraftfahrzeug.

## Claims

1. Shock absorber jack for the oleo-pneumatic suspension of an automotive vehicle for example and of the type comprising a cylinder (2) linked to the structure of the vehicle and inside which a piston (4) slides whose rod (6) is linked to an arm (17) carrying a wheel, said piston delimiting in the cylinder (2), on the side opposite to its rod (6) a high pressure chamber (7) containig oil under pressure and connected to an oleo-pneumatic accumulator through a damper (8), characterized in that it comprises a circuit for recovering the oil coming from the high pressure chamber (7) and oozing between the piston and the cylinder, this circuit comprising an annular groove (25) made in the piston (4) and communicating through a bore (26, 27) made in the said piston with an axial hole (28) made in the rod (6) of piston (4) and communicating with a ball-and-socket joint (37) through which the rod (6) of piston (4) is linked to the arm (17) carrying the wheel.

2. Jack according to claim 1, characterized in that the rod (6) of piston (4) is solid with the casing (16) of the aforesaid ball-and-socket joint (37), the said casing comprising a bore (45) communicating, on the one hand, with the axial hole (28) of the piston rod (6) and, on the other hand, with a space (46) comprised between this casing and a hood (35) which covers the same.

3. Jack according to claim 2, characterized in that the aforesaid space (46) is connected to a recovered oil tank through a conduit (29) solid with the aforesaid hood (35).

4. Vehicle equipped with shock absorber jacks according to any one of the preceding claims.

FIG 1

Fig. 2

Fig. 3